(19) Europäisches Patentamt

European Patent Office

Office européen des brevets

(11) EP 0 642 960 B1

(12) **FASCICULE DE BREVET EUROPEEN**

(45) Date de publication et mention
de la délivrance du brevet:
**18.09.1996 Bulletin 1996/38**

(51) Int. Cl.⁶: $B60T\ 8/00$

(21) Numéro de dépôt: **94401573.4**

(22) Date de dépôt: **08.07.1994**

(54) **Procédé d'asservissement de la vitesse angulaire d'une roue de véhicule automobile pendant une phase de freinage**

Verfahren zur Winkelgeschwindigkeit-Steuerung eines Kraftfahrzeugrads während einer Bremsphase

Process for controlling an angular speed of vehicle wheel in a braking phase

(84) Etats contractants désignés:
**DE GB IT**

(30) Priorité: **10.09.1993 FR 9310815**

(43) Date de publication de la demande:
**15.03.1995 Bulletin 1995/11**

(73) Titulaires:
• **AUTOMOBILES PEUGEOT**
**75116 Paris (FR)**
• **AUTOMOBILES CITROEN**
**92200 Neuilly sur Seine (FR)**

(72) Inventeur: **Bailleux, Francois**
**F-91400 Val d'albian (FR)**

(74) Mandataire: **Robert, Jean-François**
**PSA - PEUGEOT - CITROEN,**
**Centre Technique CITROEN,**
**Propriété Industrielle,**
**Route de Gisy**
**78140 Velizy (FR)**

(56) Documents cités:
**EP-A- 0 508 146**       **WO-A-89/04783**
**DE-A- 4 112 738**

Printed by Rank Xerox (UK) Business Services
2.13.4/3.4

## Description

La présente invention concerne un procédé d'asservissement de la vitesse angulaire d'une roue de véhicule automobile pendant une phase de freinage.

On connaît actuellement un dispositif de freinage anti-blocage des roues d'un véhicule automobile asservissant les quatre roues de celui-ci lors d'un freinage sur une vitesse calculée du véhicule. La vitesse calculée est obtenue à partir de la détermination d'une moyenne des vitesses angulaires des quatre roues déterminées par des capteurs de vitesse angulaire associés respectivement aux quatre roues, moyenne correspondant ainsi à la vitesse angulaire de consigne de l'asservissement de chaque roue qui est la même pour les quatre roues. Le document WO-A-89/04783 décrit un dispositif de ce type

Cependant, ce système de freinage connu présente des inconvénients liés aux deux situations suivantes.

La première situation concerne le cas où les roues avant du véhicule ont un diamètre inférieur aux roues arrière lorsque par exemple les pneumatiques des roues avant s'usent plus vite que ceux des roues arrière pour un véhicule à traction avant.

Dans ce cas, pour une vitesse de déplacement constante du véhicule, on a la relation $\omega_{AV} > \omega_{AR}$, où $\omega_{AV}$ est la vitesse angulaire d'une roue avant et $\omega_{AR}$ est la vitesse angulaire d'une roue arrière, du fait que les roues avant tournent plus vite que les roues arrière du véhicule. Dans la mesure où la vitesse de référence est en principe

$$\frac{\omega_{AV} + \omega_{AR}}{2},$$

l'asservissement de l'essieu avant s'effectue sur une vitesse inférieure à la vitesse réelle des roues avant. Dans ces conditions, le taux de glissement de l'essieu avant est plus important, ce qui a pour conséquence une baisse de la directivité du véhicule.

On rappellera que le taux de glissement (en %) est déterminé par la formule :

$$\left[ 1 - \left( \frac{\text{vitesse roue}}{\text{vitesse théorique}} \right) \right] \times 100$$

Les vitesses considérées étant des vitesses angulaires.

Cette formule montre que lorsque la vitesse de la roue est égale à la vitesse théorique, le taux de glissement est nul tandis que lorsque la vitesse de la roue est nulle, le taux de glissement est de 100% (roue bloquée).

La seconde situation concerne le cas où les roues avant ont un diamètre supérieur aux roues arrière du véhicule, par exemple lorsque les roues avant sont échangées après usure.

Dans ce cas, pour une vitesse constante de déplacement du véhicule, la vitesse angulaire des roues avant est inférieure à celle des roues arrière.

Lors d'un freinage, le système anti-blocage cherche à asservir la vitesse angulaire des roues avant sur une vitesse angulaire supérieure à la vraie valeur. En conséquence, il y a sous-freinage de l'essieu avant, ce qui cause une mauvaise décélération.

La présente invention a pour but d'éliminer les inconvénients des dispositifs anti-blocage liés aux deux situations exposées ci-dessus.

A cet effet, le procédé conforme à l'invention d'asservissement de la vitesse angulaire d'une roue de véhicule automobile pendant une phase de freinage, dans lequel la vitesse angulaire de consigne est déterminée en fonction de la vitesse du véhicule, est caractérisé en ce qu'il comprend les étapes suivantes :

a) détecter la vitesse angulaire de chaque roue du véhicule ;
b) calculer la moyenne de ces vitesse angulaires ;
c) en déduire une vitesse du véhicule calculée $V_{cal}$ par la formule :

$$V_{cal} = \omega\, L_o$$

où $\omega$ est la vitesse angulaire moyenne et
$L_o$ est la longueur développée théorique de chaque roue ; et
d) déterminer la vitesse angulaire de consigne de la roue considérée par la formule :

$$\omega_i = \frac{V_{cal}}{L_i}$$

où $L_i$ est la longueur développée de la roue.

Selon une autre caractéristique de l'invention, le procédé comprend également les étapes suivantes, effectuées avant l'étape a) en dehors des périodes de freinage et destinées à déterminer la longueur développée $L_i$ de chaque roue :
e) détecter la vitesse angulaire $\omega_i$ de chaque roue du véhicule ;
f) calculer la moyenne $\omega$ de ces vitesses angulaires ; et
g) déterminer la longueur développée $L_i$ de chaque roue par la formule :

$$L_i = \frac{\omega}{\omega_i} \times L_o$$

Les étapes précitées e) à g) du procédé de l'invention sont répétées à intervalles réguliers avec un filtrage pour éliminer les variations de vitesse ou glissements parasites.

Avantageusement, le procédé consiste de plus à déclencher une alarme si la longueur développée d'une roue s'écarte de la longueur développée théorique et/ou de la longueur développée des autres roues d'une valeur-supérieure à une valeur prédéterminée.

De plus, l'asservissement est effectué individuellement pour chaque roue.

Selon une variante de réalisation, l'asservissement est effectué par essieu.

Le procédé de l'invention trouve application notamment à l'estimation d'usure des pneumatiques et/ou à la détection du montage d'une roue de diamètre incorrect.

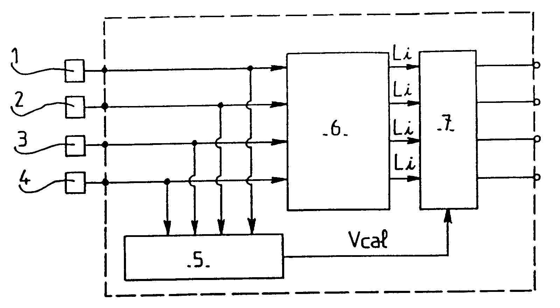

L'invention sera mieux comprise et d'autres buts, caractéristiques, détails et avantages de celle-ci apparaîtront plus clairement au cours de la description explicative qui va suivre faite en référence à la figure unique représentant sous forme de schéma bloc le dispositif de calcul mettant en oeuvre le procédé d'asservissement conforme à l'invention.

Le procédé conforme à l'invention permettant d'asservir la vitesse angulaire d'une roue d'un véhicule automobile pendant une phase de freinage va être décrit en référence à la figure unique.

Cette figure représente quatre capteurs 1-4 permettant de mesurer les vitesses angulaires respectivement des quatre roues d'un véhicule automobile. Les signaux de sortie de ces quatre capteurs 1-4 sont transmis d'une part à un calculateur 5 permettant de déterminer une vitesse du véhicule $V_{cal}$ à partir de la moyenne calculée par celui-ci des quatre vitesses angulaires mesurées par les capteurs 1-4, selon la formule : $V_{cal} = \omega \, L_o$, où $\omega$ est la vitesse angulaire moyenne calculée ; et $L_o$ est la longueur développée théorique connue de chaque roue du véhicule et d'autre part à un calculateur 6 permettant de déterminer la longueur développée $L_i$ de chaque roue du véhicule comme cela sera expliqué ultérieurement.

La référence 7 désigne un autre calculateur permettant de déterminer la vitesse angulaire de consigne de la roue considérée à partir des informations sortant des calculateurs 5 et 6 par la formule :

$$\omega_i = \frac{V_{cal}}{L_i}$$

La longueur développée $L_i$ de la roue considérée est déterminée pendant que roule le véhicule, en dehors des périodes de freinage.

La détermination de la longueur développée ne peut se faire que si les quatre vitesses de roues du véhicule sont constantes ou ont des dérivées identiques pendant un temps assez long, par exemple de 60 secondes.

La détermination de la longueur développée de chaque roue consiste à détecter la vitesse angulaire $\omega_i$ de chaque roue du véhicule par les capteurs 1-4 ; calculer la moyenne $\omega$ de ces vitesses angulaires ; et déterminer la longueur développée $L_i$ de chaque roue par la formule :

$$L_i = \frac{\omega}{\omega_i} \times L_o$$

Les étapes permettant de déterminer à la manière ci-dessus expliquée la longueur développée $L_i$ de chaque roue sont répétées à intervalles réguliers pendant un temps assez long avec un filtrage passe-bas pour éliminer les variations de vitesse ou glissements parasites. Cette correction par le filtrage passe-bas est nécessaire du fait que dans le cas où le véhicule est en accélération en virage par exemple, la dérivée de la vitesse angulaire de la roue droite est différente de la dérivée de la vitesse angulaire de la roue gauche.

Il est possible de prévoir des moyens (non représentés) permettant de déclencher une alarme si la longueur développée d'une roue s'écarte de la longueur développée théorique et/ou de la longueur développée des autres roues d'une valeur supérieure à une valeur prédéterminée.

Le procédé conforme à l'invention corrige ainsi les deux défauts mentionnés au début de la description.

Autrement dit, chaque roue est effectivement asservie à la vitesse angulaire correspondant à la longueur développée de la roue et il n'y a donc plus de sous-freinage des roues de plus grande dimension (gain en glissement de quelques %).

De plus, la monte d'une roue de secours (ou lors d'une mauvaise réparation, une roue plus petite) peut être détectée comme expliqué ci-dessus par l'alarme précitée qui peut consister en un clignotement d'un voyant témoin du tableau de bord du véhicule.

Il va de soi que le calculateur du système anti-blocage des roues doit être plus puissant que ceux utilisés actuellement car le nombre de calculs effectués ci-dessus est plus grand du fait que chaque roue doit être traitée séparément.

Par ailleurs, les valeurs des longueurs développées doivent être changées lentement car le procédé permet également d'estimer l'usure des pneumatiques. La variation des longueurs développées doit être contrôlée et limitée à des valeurs prédéterminées.

Afin d'éviter les corrections précitées à l'aide du filtre passe-bas pendant les phases où le véhicule se déplace en virage, la constante de temps du filtre doit être de quelques heures. Les valeurs de correction doivent bien entendu être conservées dans une mémoire du dispositif anti-blocage lors de l'arrêt du véhicule.

Le procédé a été décrit en effectuant l'asservissement individuellement pour chaque roue, mais il est bien entendu que cet asservissement peut être également effectué par essieu sans sortir du cadre de la présente invention.

## Revendications

1. Procédé d'asservissement de la vitesse angulaire d'une roue de véhicule automobile pendant une phase de freinage, dans lequel la vitesse angulaire de consigne est déterminée en fonction de la vitesse du véhicule, caractérisé en ce qu'il comprend les étapes suivantes :

a) détecter la vitesse angulaire de chaque roue du véhicule ;

b) calculer la moyenne de ces vitesse angulaires ;

c) en déduire une vitesse du véhicule calculée $V_{cal}$ par la formule :

$$V_{cal} = \omega\, L_o$$

où $\omega$ est la vitesse angulaire moyenne et $L_o$ est la longueur développée théorique de chaque roue ; et

d) déterminer la vitesse angulaire de consigne de la roue considérée par la formule :

$$\omega_i = \frac{V_{cal}}{L_i}$$

où $L_i$ est la longueur développée de la roue.

2. Procédé selon la revendication 1, caractérisé en ce qu'il comprend les étapes suivantes, effectuées avant l'étape a) en dehors des périodes de freinage et destinées à déterminer la longueur développée $L_i$ de chaque roue :

e) détecter la vitesse angulaire $\omega_i$ de chaque roue du véhicule ;

f) calculer la moyenne $\omega$ de ces vitesses angulaires ; et

g) déterminer la longueur développée $L_i$ de chaque roue par la formule :

$$L_i = \frac{\omega}{\omega_i} \times L_o$$

3. Procédé selon la revendication 2, caractérisé en ce que les étapes e) à g) sont répétées à intervalles réguliers avec un filtrage pour éliminer les variations de vitesse ou glissements parasites.

4. Procédé selon l'une des revendications précédentes, caractérisé en ce qu'il consiste à déclencher une alarme si la longueur développée d'une roue s'écarte de la longueur développée théorique et/ou de la longueur développée des autres roues d'une valeur supérieure à une valeur prédéterminée.

5. Procédé selon l'une des revendications précédentes, caractérisé en ce que l'asservissement est effectué individuellement pour chaque roue.

6. Procédé selon l'une des revendications 1 à 4, caractérisé en ce que l'asservissement est effectué par essieu.

7. Application du procédé selon l'une des revendications 1 à 6 à l'estimation d'usure des pneus et/ou à la détection du montage d'une roue de diamètre incorrect.

## Claims

1. A method for controlling the angular speed of a motor vehicle wheel during a braking phase, in which the reference angular speed is determined as a function of the speed of the vehicle, characterised in that it comprises the following steps:

a) detecting the angular speed of each wheel of the vehicle;

b) calculating the mean of these angular speeds;

c) deducing therefrom a calculated vehicle speed $V_{cal}$ using the formula:

$$V_{cal} = \omega\, L_o$$

where $\omega$ is the mean angular speed and $L_o$ is the theoretical developed length of each wheel; and

d) determining the reference angular speed of the wheel in question using the formula:

$$\omega_i = \frac{V_{cal}}{L_i}$$

where $L_i$ is the developed length of the wheel.

2. A method according to Claim 1, characterised in that it comprises the following steps, performed before step a) outside periods of braking and intended to determine the developed length $L_i$ of each wheel:

e) detecting the angular speed $\omega_i$ of each wheel of the vehicle;

f) calculating the mean $\omega$ of these angular speeds; and

g) determining the developed length $L_i$ of each wheel using the formula:

$$L_i = \frac{\omega}{\omega_i} \times L_o$$

3. A method according to Claim 2, characterised in that steps e) to g) are repeated at regular intervals with filtering to eliminate variations in speed or extraneous slippage.

4. A method according to one of the preceding claims, characterised in that it consists in triggering an alarm if the developed length of a wheel deviates from the theoretical developed length and/or the developed length of the other wheels by a value that is greater than a predetermined value.

5. A method according to one of the preceding claims, characterised in that the control is performed individually for each wheel.

6. A method according to one of Claims 1 to 4, characterised in that the control is performed by axle.

7. Application of the method according to one of Claims 1 to 6 for estimating wear on tyres and/or for detecting that a wheel of incorrect diameter has been fitted.

## Patentansprüche

1. Verfahren zur Winkelgeschwindigkeitssteuerung eines Kraftfahrzeugrads während einer Bremsphase, bei welchem die Soll-Winkelgeschwindigkeit in Abhängigkeit von der Geschwindigkeit des Fahrzeugs bestimmt wird, gekennzeichnet durch folgende Schritte:

> a) Erfassen der Winkelgeschwindigkeit eines jeden Fahrzeugrades;
> b) Berechnen des Mittelwerts dieser Winkelgeschwindigkeiten;
> c) daraus eine berechnete Fahrzeuggeschwindigkeit $V_{cal}$ anhand der Formel:
>
> $$V_{cal} = \omega L_o$$
>
> Ableiten, wobei $\omega$ die mittlere Winkelgeschwindigkeit und $L_o$ die theoretische Abrollänge eines jeden Rades ist; und
> d) Bestimmen der Sollwinkelgeschwindigkeit des betrachteten Rades anhand der Formel:
>
> $$\omega_i = \frac{V_{cal}}{L_i},$$
>
> wobei $L_i$ die Abrollänge des Rades ist.

2. Verfahren nach Anspruch 1, gekennzeichnet durch folgende, vor dem Schritt a) außerhalb der Bremsphasen durchgeführte und zur Bestimmung der Abrollänge eines jeden Rades dienende Schritte:

> e) Erfassen der Winkelgeschwindigkeit $\omega_i$ eines jeden Fahrzeugrades;
> f) Berechnen des Mittelwerts $\omega$ dieser Winkelgeschwindigkeiten; und
> g) Bestimmen der Abrollänge $L_i$ eines jeden Rades nach der Formel:
>
> $$L_i = \frac{\omega}{\omega_i} \times L_o$$

3. Verfahren nach Anspruch 2, dadurch gekennzeichnet, daß die Schritte e) bis g) in regelmäßigen Zeitabständen mit einer Filterung zum Unterdrücken von Geschwindigkeitsschwankungen oder parasitärer Driften wiederholt werden.

4. Verfahren nach einem der vorhergehenden Ansprüche, dadurch gekennzeichnet, daß ein Alarm ausgelöst wird, wenn die Abrollänge eines Rades sich von der theoretischen Abrollänge und/oder der Abrollänge der anderen Räder um mehr als einen vorgegebenen Wert entfernt.

5. Verfahren nach einem der vorhergehenden Ansprüche, dadurch gekennzeichnet, daß die Steuerung einzeln für jedes Rad durchgeführt wird.

6. Verfahren nach einem der Ansprüche 1 bis 4, dadurch gekennzeichnet, daß die Steuerung achsenweise durchgeführt wird.

7. Verwendung des Verfahrens nach einem der Ansprüche 1 bis 6 zur Abschätzung des Verschleißes der Reifen und/oder der Erkennung der Montage eines Rades mit falschem Durchmesser.